# EUROPEAN PATENT SPECIFICATION

(11) **EP 1 367 369 B1**
(45) Date of publication and mention of the grant of the patent: **25.07.2007**
(21) Application number: 02425362.7
(22) Date of filing: 31.05.2002
(51) Int. Cl.: G01D 5/48

(54) **Magnetostrictive transducer**
Magnetostriktiver Geber
Capteur magnétostrictif

(43) Date of publication of application: 03.12.2003
(73) Proprietor: Gefran S.p.A., 25050 Provaglio d'Iseo (Brescia) (IT)
(72) Inventor: Perini, Marcello, 25045 Castegnato (BS) (IT); Loda, Damiano, 25060 Cellatica (BS) (IT); Danesi, Simone, 25046 Cazzago S.M.(BS) (IT); Manessi, Mauro, 25046 Bornato (BS) (IT); Drera, Lionello, 25049 Iseo (BS) (IT); Filini, Luigi, 25073 Bovezzo (BS) (IT); Lanzani, Federico, 25028 Verolanuova (BS) (IT); Zilioli, Edoardo, c/o Gefran Sensori S.r.l., 25050 Provaglio D'Iseo (BS) (IT)
(74) Representative: Leihkauf, Steffen Falk

(56) References cited:
- US-A- 5 804 961
- US-A- 5 952 823

## Description

### Field of Application

The present invention relates to an improved magnetostrictive transducer structure.

Although not limited to, the invention relates in particular to a device as above, which comprises a tubular case enclosing a tubular waveguide made of a magnetostrictive material, a wire lead being extended inside the waveguide between the opposed ends of the waveguide to receive current pulses and produce a magnetostrictive effect on a magnetic slider that is mounted for sliding movement along the outer surface of the case.

### Prior Art

As the skilled ones in the art know well, magnetostrictive transducers are position detectors that operate on a magnetic type of detection principle.

Position detectors of this kind comprise a wire lead, extended centrally and coaxially through a tubular magnetostrictive waveguide. The opposed ends of the waveguide are usually attached to a tubular protection case, an annular slider being mounted for sliding movement along the outer surface of the case and provided with a permanent magnet.

The case is attached to a hardware reference, and the slider is made rigid with whatever element requires to be accurately tracked for position or relative displacement from the hardware reference.

Thus, the magnet can be moved along the tubular case, and its magnetic field interacts with a magnetic field induced around the waveguide by a current flowed through the wire lead. The interaction of the two magnetic fields causes the waveguide to be twisted elastically by magnetostrictive effect.

An electronic circuit including a pulse generator is associated with one end of the waveguide. As a current pulse is applied to the wire lead, a mechanical wave is produced inside the waveguide at the location of the permanent magnet slider on the case exterior.

This wave propagates in both directions along the tubular waveguide. The wave is dampened at one end by an appropriate damper means, while at the other end, the wave is detected by a transducer, e.g. a piezoelectric element, and converted to an electric signal.

The delay between the time when the current pulse is applied by said pulse generating circuit to one end of the wire lead mounted coaxially within the waveguide, and the time when a return pulse due to the magnetostrictive effect is received, enables the position of the permanent magnet slider outside to be calculated with great accuracy.

A magnetostrictive transducer that operates as described above is disclosed in US Patent 4,654,590.

Another magnetostrictive transducer that includes a piezoelectric detector adapted to detect the magnetostrictive wave is disclosed in US Patent 5,804,961.

Transducers of this kind require that a conduction path be provided for the current pulse applied to the wire lead to be propagated in one direction, i.e. from one end to the other, and the mechanical wave due to the magnetostrictive effect to be propagated in the opposite direction. For this purpose, the outer protection case is made of a non-magnetic conductive material and connected electrically to the wire lead core. Thus, the return conduction path is provided by the case itself. All this conforms with the teachings of US Patent (granted to Application Serial No. 09/489,918, write in the number of the patent granted) to this Applicant.

It can be appreciated from the foregoing that the construction of these transducers is a complicated and expensive one.

Quality control requires the application of stringent checks in order to ensure that highly accurate readings can be obtained from the magnetostrictive transducers, which is cost-intensive.

In addition, very expensive materials must be used, and highly skilled labor must be available for the assembly process.

The state of the art provides several techniques for reducing both the transducer components and the costs of manufacturing and assembling such components.

For example, US Patent 6,087,828 teaches how to make an electronic circuit that incorporates both a pulse generator and means of picking up the return pulses. However, this is achieved by adding to the complication of the transducer structure.

US Patent 6,232,769 discloses a flexible support element, substantially tubular or sleeve-like in shape, that carries a lead inside a waveguide and allows the lead to be displaced coaxially within the waveguide in a precise manner.

Although on several counts advantageous and essentially achieving their objects, such embodiments do little to lower the manufacturing cost of such transducers by any appreciable extent, and can only marginally attenuate the difficulties connected with their manufacture.

The underlying technical problem of this invention is to provide a magnetostrictive transducer of much simpler construction, which can be manufactured and assembled at much lower costs, thereby overcoming some of the limitations of prior transducers.

### Summary of the Invention

The solution idea of this invention is to provide support along the length of the sensitive element of the transducer, i.e. along the waveguide that encloses the wire lead extended lengthwise through it. Advantageously, the support is provided in the form of a PC board having a conductive strip that extends lengthwise on it. The waveguide bears on isolating supports provided at regular intervals along the board, and the PC board bears on isolating supports provided inside the case and is held a predetermined distance away from the inner wall of the case.

Based on this idea, the technical problem is solved by a magnetostrictive transducer as previously indicated, and as defined in Claim 1 and following.

The features and advantages of a transducer according to the invention will become apparent from the following description of an embodiment thereof, given by way of non-limiting example with reference to the accompanying drawings.

### Brief Description of the Drawings

Figure 1 is a schematic longitudinal section view of a magnetostrictive transducer according to the invention.
Figure 2 is a schematic detail view, from above, of the transducer shown in Figure 1.
Figure 3 is a cross-section view of the transducer, taken along line III-III in Figure 1.
Figure 4 is a perspective view of a detail of the transducer shown in Figure 2.
Figure 5 is an enlarged perspective view of a portion of the detail shown in Figure 4.
Figures 6A and 6B are schematic top and side views, respectively, of a support member incorporated to the transducer of Figure 1.

### Detailed Description

With reference to the drawings, a magnetostrictive transducer of improved construction according to the invention is shown generally at 1 in schematic form.

The transducer 1 comprises an essentially tubular outer case 2 of elongate shape. Of course, the cross-sectional shape of the tubular case may be any one. The case 2 provides basically an enclosure for a waveguide 5 of a magnetostrictive signal that is produced, within the transducer, by coupling to a permanent magnet slider mounted for sliding movement on the case exterior and omitted from the drawings because conventional.

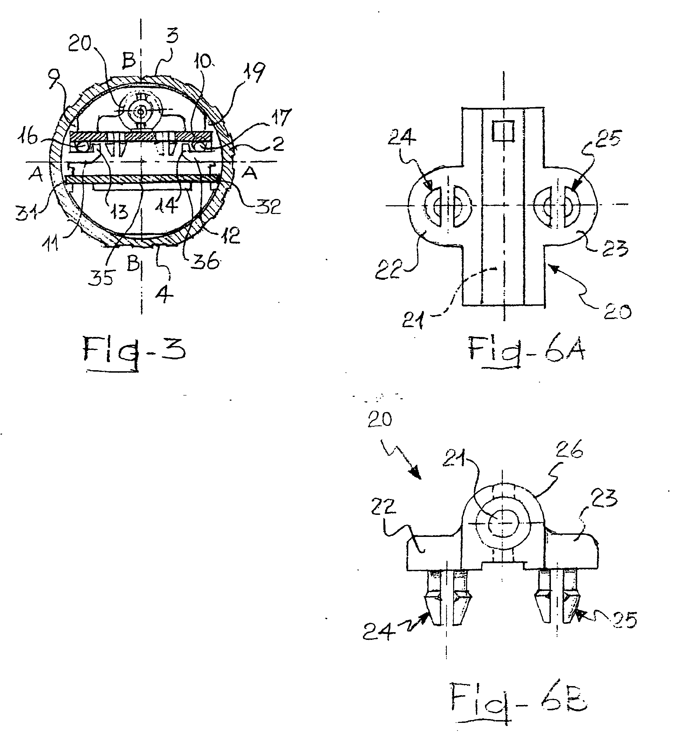

The case 2 is made preferably of a non-magnetic metal material, e.g. of extruded aluminum alloy, and has an oblate circle cross-sectional shape with diametrically opposed ends 3 and 4 that are slightly flattened, as shown in Figure 3. This oblate shape defines a major diameter A-A and a minor diameter B-B in the cross-section of the case 2. Of course, the outer surface of the case 2 is formed with opposed flats at the flattened ends of the circular cross-section. This makes fitting the case 2 and securing it in place an easier task in many applications where the transducer requires to be precision oriented.

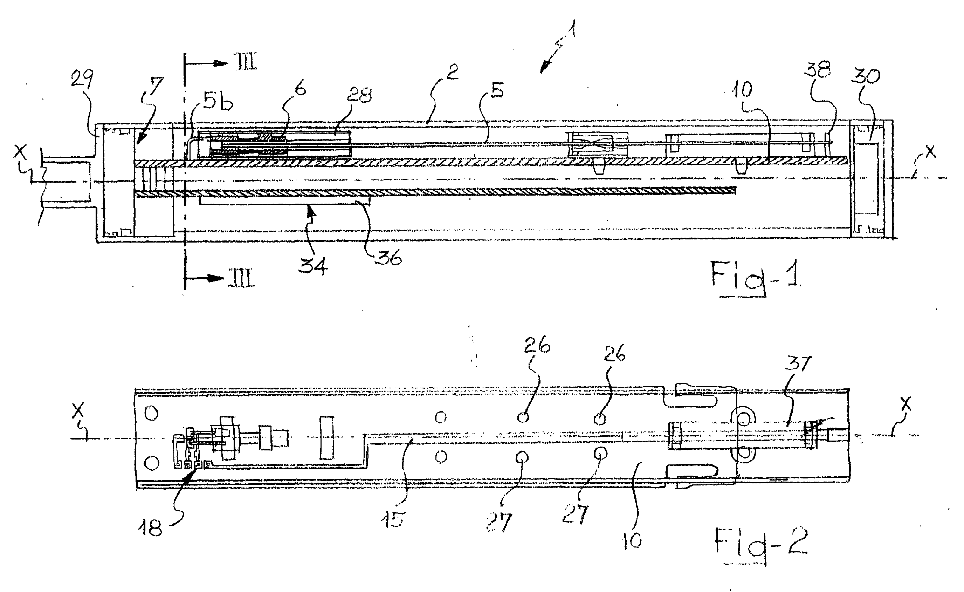

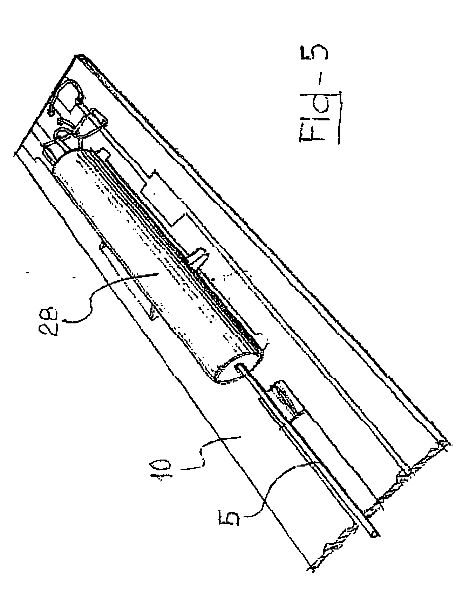

The sensitive element of the transducer, i.e. the waveguide 5 that encloses a wire lead 5b extending lengthwise between the waveguide ends, is housed in the case 2. The wire lead 5b is to receive a current pulse from a pulse generating circuit 36 that is incorporated to an electronic circuit 34 and associated with the lead 5b at one end 7 of the transducer. The other end of the waveguide 5 bears on a reed 38, as shown in Figure 1.

The free end of the case 2 is stopped by a plug 30, and the case end 7 is stopped by a connector 29, through which a number of electrical connections can be established to the outside world, as explained hereinafter.

Advantageously in this invention, the waveguide 5 bears with its length on a sheet-like support 10 made of a dielectric material, e.g. of GRP.

More particularly, the support 10 comprises a PC board having a predetermined thickness dimension and being cut to the shape of an elongate rectangle. The board 10 is provided slightly longer than the waveguide 5 and slightly shorter than the case 2.

The magnetostrictive signal is picked up by a transducer 6 that is mounted on one end of the support 10 and connected to the waveguide 5. The transducer 6 is shrouded under a cylindrical metal cover 18, as shown in Figures 1 and 4.

The interior of the case 2 is formed with integral ribs 11, 12 that extend lengthwise and locate opposite to each other in a plane substantially containing the major diameter A-A of the case cross-section.

The ribs 11 and 12 protrude into the case 2 and have respective end edges 13, 14 that are turned up.

These ribs 11, 12 provide supporting brackets for holding the board or support 10 parallel to the longitudinal axis X-X of the case 2, a predetermined distance away from it. In essence, the board 10 is held parallel to the flats on the outer surface of the case 2, but offset from the case axis X-X.

Isolating supports may be provided between the longitudinal edges of the board 10 and its longitudinal supports comprising the ribs 11 and 12. For example, these isolating supports may be seals or moldings 16 held in place by the upturned edges 13, 14 of the ribs 11, 12.

Furthermore, the board 10 is located by respective detents 9, 19, arranged to protrude into the case 2 and extend parallel to each rib 11 and 12 lengthwise of the board. The detents 9, 19 delimit, in cooperation with the inner case wall and the respective ribs 11, 12, a substantially C-shaped seat, in which the longitudinal edges of the board 10 are held.

The board 10 has conductive strips and pads, conventionally patterned thereon as by pressing or deposition, of a printed circuit 18. The pads serve to interconnect the board 10 with an additional board 35, to be described, e.g. by means of electrical connection leads. Also, the printed circuit 18 includes a circuit for the torsional wave transducers and a circuit for connection to electronic components on the board 35.

In particular, one of the conductive strips, 15, extends along the longitudinal centerline of the board 10 under the wire lead 5, aligned to the latter.

The strip 15 forms a conduction path that is connected to the wire lead 5b to close the electric circuit through which the current pulse is passed that generates the magnetic field in the waveguide 5.

The predetermined spacing of the waveguide 5 from the board 10 and the conductive strip 15 is maintained by isolating supports 20, which supports are provided in sufficient number to hold it along the length of the board 10.

Each support 20 is made of an insulative material, e.g. a polycarbonate, and comprises a sleeve 21, also made of an insulative material, e.g. a silicone, through which the waveguide 5 extends. The support 20 further comprises opposed abutment flanges 22, 23 that are formed integrally with it. Each flange is formed with integral lugs 24, 25 for snap engagement in corresponding holes 26, 27 provided through the board 10.

The lugs 24, 25 have at least one pair of prongs adapted to be flexed in toward each other, each prong being terminated with a serration for positive engagement in the respective hole.

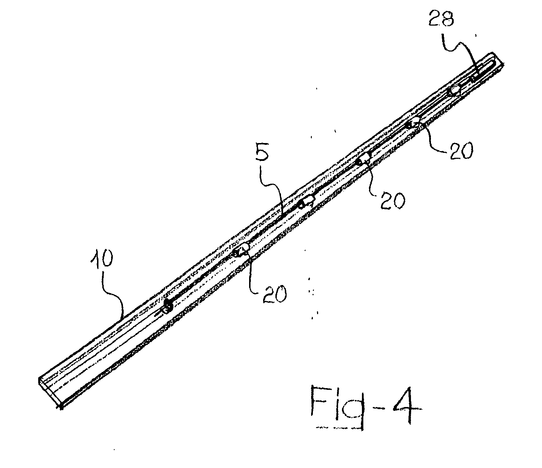

Hole pairs 26, 27, located on opposed sides of the conductive strip 15, are provided along the board 10, preferably at pitch spacings as shown in Figure 2.

At one end of the waveguide 5, a special support 37 is provided next to the plug 30; the support 37 being more elongate in shape than the supports 20 and serving to dampen the mechanical torsional wave. More particularly, the tubular portion of the support 37, enclosing the waveguide 5, can be filled with an adhesive. Alternatively, the tubular portion of the support 37 could comprise a series of sleeves of increasing diameters in superposed wraps around the waveguide.

As said before, a transducer means 6 is provided on one end 7 of the transducer to pick up magnetostrictive signals produced within the case 2 by the application of a current pulse to the wire lead 5b.

This means can advantageously be mounted on the PC board inside the case 2.

In addition, a second board 35 may be fitted inside the case 2, as shown in Figures 1 and 3. For the purpose, the interior of the case 2 would be provided lengthwise with opposite located grooves 31, 32 for holding the board 35.

Thus, the supporting arrangement for the board 35 is essentially the same as for the board 10, only somewhat simpler. The board 35 extends lengthwise, parallel to the board 10, in the half of the case 2 that is unoccupied by the board 10.

The board 35 provides power and electrical connections to the components and integrated circuits 34 arranged to generate the current pulses to the wire lead 5b, as well as to process the signal picked up by the transducer means 6. In essence, the transducer 6 is mounted on the board 10, while the pulse generator 36 is powered through the board 35.

To now review the operation of the transducer 1 according to the invention:
an appropriate current pulse is applied from the generator circuit 36 mounted on the board 35 to the wire lead 5b, at the transducer end 7, such that the pulse can be propagated through the wire lead 5b to the other transducer end carried on the reed 38.

The current pulse produces a magnetic field in the waveguide 5, which will interfere with the field from the permanent magnet(s) in the slider moved along the outer surface of the case 2. At the slider location, the mutually interfering magnetic fluxes will induce a torsional elastic deformation, whereby a mechanical wave or vibration is produced that will propagate in both directions.

At the end 7, the mechanical wave is detected by the transducer 6, while at the other end, the wave is damped by the support 37.

The invention does solve the technical problem and provides a number of advantages, foremost among which is that the manufacturing cost, assembly time, and wiring time of such transducers are reduced dramatically.

By arranging for the waveguide to be carried on the PC board connected to the electronic control and monitoring devices, and by providing the case interior with board-holding slideways, assembling the transducer is made a much easier operation to perform.

In addition, the parallel lay of the boards 10 and 35 within the case 2 makes the connections between electronic transducer components mounted on the board, testing, and any repair work easier to complete.

## Claims

1. A magnetostrictive transducer structure (1), which comprises a tubular case (2) enclosing a tubular waveguide (5) made of a megnetostrictive material, and comprising a wire lead (5b) extended lengthwise within the waveguide (5) between opposed ends thereof, said wire lead receiving current pulses to produce a magnetostrictive effect on a magnetic slider mounted for sliding movement along the outer surface of the case, **characterised in that** said waveguide (5) is supported along its length on a plate support or board (10) made of a dielectric material and **in that** said board (10) is carried longitudinally on opposite lengthwise extending integral ribs (11, 12) on the interior side of the case which ribs provide board-holding slideways during assembly of the transducer.

2. A transducer according to Claim 1, **characterised in that** said plate (10) is a printed circuit board.

3. A transducer according to Claim 1, **characterised in that** said plate (10) is made of glass-reinforced plastics.

4. A transducer according to Claim 2, **characterised in that** a conductive strip (15) is formed on said board and extends parallel to said waveguide (5).

5. A transducer according to Claim 1, **characterised in that** said waveguide (5) is held a predetermined distance away from said board (10) by isolating supports (20).

6. A transducer according to Claim 5, **characterised in that** each support (20) comprises an insulating sleeve (21) through which said waveguide (5) is passed, and opposed abutment flanges (22,23) formed with lugs (24,25) for snap engagement in corresponding holes (26,27) provided through said board (10).

7. A transducer according to Claim 6, **characterised in that** said holes (26,27) are formed along either sides of said conductive strip (15).

8. A transducer according to Claim 1, **characterised in that** said ribs (11,12) protrude into said case (2).

9. A transducer according to Claim 8, **characterised in that** respective seals (16,17) are mounted between the longitudinal edges of the board (10) and the oppositely located ribs (11,12).

10. A transducer according to Claim 8, **characterised in that** the board (10) is held parallel to the case axis X-X but offset from said axis.

11. A transducer according to Claim 2, **characterised in that** it comprises a second printed circuit board (35) extending parallel to said first board (10) within said case (2).

12. A transducer according to Claim 11, **characterised in that** a printed circuit portion (18) is formed on said first board for the torsional wave transducers and for the electrical connections to electronic components on said second board.

13. A transducer according to Claim 11, **characterised in that** a circuit (36) generating said current pulses is mounted on said second board (35).

14. A transducer according to Claim 11, **characterised in that** said first board (10) and second board (35) are interconnected by connection contacts between their respective printed circuits.

15. A transducer according to Claim 2, **characterised in that** a transducer means (6) for the magnetostrictive signal is mounted on the board (10).

## Patentansprüche

1. Magnetostriktive Transducerstruktur (1), welche ein röhrenförmiges Gehäuse (2) umfasst, welches einen röhrenförmigen Wellenleiter (5) einschließt, welcher aus einem magnetostriktiven Material hergestellt ist, und welcher eine Drahtleitung (5b) umfasst, welche sich in der Längsrichtung innerhalb des Wellenleiters (5) zwischen gegenüberliegenden Enden davon erstreckt, wobei die Drahtleitung Stromimpulse empfängt, um einen magnetostriktiven Effekt auf einem magnetischen Gleiter herzustellen, welcher zur gleitenden Bewegung entlang der äußeren Oberfläche des Behälters montiert ist, **dadurch gekennzeichnet, dass** der Wellenleiter (5) entlang seiner Länge auf einem Plattenträger oder einer Platte (10) gelagert ist, welche aus einem dielektrischen Material hergestellt ist, und dass die Platte (10) longitudinal auf sich in der Längsrichtung entgegengesetzt erstreckenden integralen Rippen (11, 12) auf der Innenseite des Gehäuses getragen wird, wobei die Rippen plattenhaltende Führungsbahnen während des Zusammenbaus des Transducers vorsehen.

2. Transducer gemäß Anspruch 1, **dadurch gekennzeichnet, dass** die Platte (10) eine gedruckte Leiterplatte ist.

3. Transducer gemäß Anspruch 1, **dadurch gekennzeichnet, dass** die Platte (10) aus glasfaserverstärktem Kunststoff hergestellt ist.

4. Transducer gemäß Anspruch 2, **dadurch gekennzeichnet, dass** ein leitender Streifen (15) auf der Platte gebildet ist und sich parallel zu der Wellenführung (5) erstreckt.

5. Transducer gemäß Anspruch 1, **dadurch gekennzeichnet, dass** der Wellenleiter (5) in einem vorbestimmten Abstand von der Platte (10) entfernt durch isolierende Träger (20) gehalten wird.

6. Transducer gemäß Anspruch 5, **dadurch gekennzeichnet, dass** jeder Träger (20) eine isolierende Hülse (21), durch welche der Wellenleiter (5) hindurchgeführt ist, und gegenüberliegende Anlageflansche (22, 23) umfasst, welche mit Ansätzen (24, 25) zum einrastenden Eingriff in entsprechende Löcher (26, 27) ausgebildet ist, welche durch die Platte (10) vorgesehen sind.

7. Transducer gemäß Anspruch 6, **dadurch gekennzeichnet, dass** die Löcher (26, 27) entlang beider Seiten des leitenden Streifens (15) ausgebildet sind.

8. Transducer gemäß Anspruch 1, **dadurch gekennzeichnet, dass** die Rippen (11, 12) in das Gehäuse (2) hereinragen.

9. Transducer gemäß Anspruch 8, **dadurch gekennzeichnet, dass** jeweilige Dichtungen (16, 17) zwischen den longitudinalen Kanten der Platte (10) und den gegenüberliegend angeordneten Rippen (11, 12) montiert sind.

10. Transducer gemäß Anspruch 8, **dadurch gekennzeichnet, dass** die Platte (10) parallel zu der Achse X-X des Gehäuses, jedoch von der Achse versetzt, gehalten wird.

11. Transducer gemäß Anspruch 2, **dadurch gekennzeichnet, dass** er eine zweite gedruckte Leiterplatte (35) umfasst, welche sich parallel zu der ersten Platte (10) innerhalb des Gehäuses (2) erstreckt.

12. Transducer gemäß Anspruch 11, **dadurch gekennzeichnet, dass** ein gedruckter Schaltungsabschnitt (18) auf der ersten Platte für Torsionswellentransducer und für elektrische Verbindungen zu elektronischen Komponenten auf der zweiten Platte gebildet ist.

13. Transducer gemäß Anspruch 11, **dadurch gekennzeichnet, dass** eine Schaltung (36), welche die Stromimpulse erzeugt, auf der zweiten Platte (35) montiert ist.

14. Transducer gemäß Anspruch 11, **dadurch gekennzeichnet, dass** die erste Platte (10) und die zweite Platte (35) miteinander durch Anschlusskontakte zwischen ihren jeweiligen gedruckten Schaltungen verbunden sind.

15. Transducer gemäß Anspruch 2, **dadurch gekennzeichnet, dass** eine Transducereinrichtung (6) für das magnetostriktive Signal auf der Platte (10) montiert ist.

## Revendications

1. Structure (1) de transducteur magnétostrictif, qui comporte un boîtier tubulaire (2) renfermant un guide d'onde tubulaire (5) formé d'une matière magnétostrictive, et comportant un fil conducteur de sortie (5b) s'étendant longitudinalement dans le guide d'onde (5) entre les extrémités opposées de celui-ci, ledit fil conducteur de sortie recevant des impulsions de courant pour produire un effet magnétostrictif sur un curseur magnétique monté de façon à effectuer un mouvement de coulissement le long de la surface extérieure du boîtier, **caractérisée en ce que** ledit guide d'onde (5) est supporté sur sa longueur sur une plaque de support ou une plaquette (10) formée d'une matière diélectrique, et **en ce que** ladite plaquette (10) repose longitudinalement sur des nervures intégrées opposées (11, 12) s'étendant longitudinalement sur le côté intérieur du boîtier, lesquelles nervures procurent des glissières de maintien de plaquettes pendant l'assemblage du transducteur.

2. Transducteur selon la revendication 1, **caractérisé en ce que** ladite plaque (10) est une plaquette à circuit imprimé.

3. Transducteur selon la revendication 1, **caractérisé en ce que** ladite plaque (10) est formée d'une matière plastique armée de verre.

4. Transducteur selon la revendication 2, **caractérisé en ce qu'**une bande conductrice (15) est formée sur ladite plaquette et s'étend parallèlement audit guide d'onde (5).

5. Transducteur selon la revendication 1, **caractérisé en ce que** ledit guide d'onde (5) est maintenu à une distance prédéterminée de ladite plaquette (10) par des supports isolants (20).

6. Transducteur selon la revendication 5, **caractérisé en ce que** chaque support (20) comporte un manchon isolant (21) dans lequel passe ledit guide d'onde (5), et des brides opposées (22, 23) d'appui formées avec des tenons (24, 25) pour un encliquetage dans des trous correspondants (26, 27) traversant ladite plaquette (10).

7. Transducteur selon la revendication 6, **caractérisé en ce que** lesdits trous (26, 27) sont formés le long des deux côtés de ladite bande conductrice (15).

8. Transducteur selon la revendication 1, **caractérisé en ce que** lesdites nervures (11, 12) font saillie dans ledit boîtier (2).

9. Transducteur selon la revendication 8, **caractérisé en ce que** les joints d'étanchéité respectifs (16, 17) sont montés entre les bords longitudinaux de la plaquette (10) et les nervures (11, 12) placées de façon opposée.

10. Transducteur selon la revendication 8, **caractérisé en ce que** la plaquette (10) est maintenue parallèlement à l'axe X-X du boîtier, mais en étant décalée dudit axe.

11. Transducteur selon la revendication 2, **caractérisé en ce qu'**il comporte une seconde plaquette (35) à circuit imprimé s'étendant parallèlement à ladite première plaquette (10) à l'intérieur dudit boîtier (2).

12. Transducteur selon la revendication 11, **caractérisé en ce qu'**une partie (18) de circuit imprimé est formée sur ladite première plaquette pour les transducteurs à ondes de torsion et pour les connexions électriques à des composants électroniques sur ladite seconde plaquette.

13. Transducteur selon la revendication 11, **caractérisé en ce qu'**un circuit (36) générant lesdites impulsions de courant est monté sur ladite seconde plaquette (35).

14. Transducteur selon la revendication 11, **caractérisé en ce que** ladite première plaquette (10) et ladite seconde plaquette (35) sont interconnectées par des contacts de connexion entre leurs circuits imprimés respectifs.

15. Transducteur selon la revendication 2, **caractérisé en ce qu'**un moyen à transducteur (6) pour le signal magnétostrictif est monté sur la plaquette (10).
